**Europäisches Patentamt**

**European Patent Office**

**Office européen des brevets**

(11) Veröffentlichungsnummer: **0 628 751 A1**

## EUROPÄISCHE PATENTANMELDUNG

(21) Anmeldenummer: **94107737.2**

(22) Anmeldetag: **19.05.94**

(51) Int. Cl.5: **F16H 47/04**, F16H 37/08

(30) Priorität: **28.05.93 DE 4317763**
**13.07.93 DE 4323358**

(43) Veröffentlichungstag der Anmeldung:
**14.12.94 Patentblatt 94/50**

(84) Benannte Vertragsstaaten:
**FR GB IT NL SE**

(71) Anmelder: **Jarchow, Friedrich, Prof. Dr.-Ing.**
**Am Ruhrstein 37**
**D-45133 Essen (DE)**

(72) Erfinder: **Jarchow, Friedrich, Prof. Dr.-Ing.**
**Am Ruhrstein 37**
**D-45133 Essen (DE)**

(74) Vertreter: **Herrmann-Trentepohl, Werner,**
**Dipl.-Ing. et al**
**Schaeferstrasse 18**
**D-44623 Herne (DE)**

(54) **Lastschaltgetriebe mit stufenlosen hydrostatischen Gangübersetzungen.**

(57) Das Getriebe besteht aus einem fünfwelligen Zahnräder-Umlaufgetriebe (1,A,B,C,E), einem dazu parallel angeordneten stufenlos einstellbaren hydrostatischen Getriebe (a,b), aus Zahnrad-Nachschaltstufen (2-11), auch Gänge genannt, und aus Schaltkupplungen (K1-K4). Zu dem hydrostatischen Getriebe gehört eine Verdrängermaschine mit verstellbarem Verdrängungsvolumen (a) und eine mit konstantem Verdrängungsvolumen (b). Von dem Umlaufgetriebe bildet eine Welle die Antriebswelle, mit der die verstellbare Verdrängermaschine in Verbindung steht. Die volumenkonstante Verdrängermaschine ist an eine zweite Welle (B) des Umlaufgetriebes angeschlossen. Die übrigen drei Wellen stellen Koppelwellen dar, die abwechselnd über die Gänge die Leistung zur Abtriebswelle führen (ab). Es gibt eine Koppelwelle (C) zum hydrostatisch-mechanischen Anfahren, eine schnellaufende (A) und eine langsamlaufende (E) Koppelwelle. In den Extremlagen der volumenverstellbaren Verdrängermaschine besorgen Schaltkupplungen die Gangwechsel ohne Zugkraftunterbrechung bei synchronen Drehzahlen. Das fünfwellige Umlaufgetriebe baut relativ kurz und läßt sich mit verhältnismäßig geringem Aufwand herstellen.

Fig. 1

EP 0 628 751 A1

Lastschaltgetriebe mit stufenlosen hydrostatischen Gangübersetzungen, d.h. stufenlos wirkende hydrostatisch-mechanische Lastschaltgetriebe der im Oberbegriff des Patentanspruches angegebenen Art eignen sich vorteilhaft für Kraftfahrzeuge, da sie sich in weiten Bereichen stufenlos verstellen lassen und außerdem gute Wirkungsgrade haben. Der relativ große Stellbereich erlaubt den Betrieb der Brennkraftmaschine auf Vorzugskennlinien. Solche Kennlinien können z. B. die Kurve für minimalen Kraftstoffverbrauch oder eine Linie für ein gutes Beschleunigungsverhalten sein.

Fig. 8 der EP 0 302 188 A1 zeigt ein hydrostatisch-mechanisches Lastschaltgetriebe mit einem fünfwelligen Umlaufgetriebe, das aus drei Planetenstufen jeweils mit den Gliedern Sonnenrad 1', Planetenradträger s', Hohlrad 2' und Sonnenrad 1'', Planetenradträger s'', Hohlrad 2'' sowie Sonnenrad 1''', Planetenradträger s''' und Hohlrad''' besteht. Es fungieren die gekoppelten Glieder 2', 2'' und s''' als Antriebswelle 1, s' und s'' als langsamlaufende, das Hohlrad 2''' als schnellaufende Koppelwelle, das Sonnenrad 1' als Anschlußwelle für die volumenkonstante Verdrängermaschine b sowie die miteinander verbundenen Sonnenräder 1'' und 1''' als Koppelwelle für das hydrostatisch-mechanische Anfahren.

Die Schrift WO 89109899 beschreibt ein hydrostatisch-mechanisches Lastschaltgetriebe mit einem fünfwelligen Umlaufgetriebe, zu dem ebenfalls 3 gekoppelte Planetenstufen gehören, und zwar die Stufe mit dem Sonnenrad 17, Planetenradträger 12, Hohlrad 20, ferner die Stufe mit dem Sonnenrad 16, Planetenradträger 19, Hohlrad 14 und schließlich die Stufe mit dem Sonnenrad 22, Planetenradträger 24 und Hohlrad 25. Zur Antriebswelle gehören die miteinander verbundenen Glieder Planetenradträger 12 und Hohlrad 14, zur langsamlaufenden Koppelwelle die gekoppelten Glieder Hohlrad 20 und Planetenradträger 24, zur schnellaufenden Koppelwelle die miteinander verbundenen Sonnenräder 17 und 22, zum Anschluß der volumenkonstanten Verdrängermaschine 7 das Sonnenrad 16 und schließlich zur Koppelwelle für das hydrostatisch-mechanische Anfahren das Hohlrad 25.

Die vorstehend geschilderten fünfwelligen Umlaufgetriebe der hydrostatisch-mechanischen Lastschaltgetriebe bauen relativ aufwendig und lang.

Die Erfindung stellt sich daher die Aufgabe, für Lastschaltgetriebe mit stufenlosen hydrostatischen Gangübersetzungen fünfwellige Umlaufgetriebe, die aus drei gekoppelten Planetenstufen bestehen, mit einem vereinfachten Aufbau vorzuschlagen.

Das kennzeichnende Merkmal des Patentanspruches löst diese Aufgabenstellung.

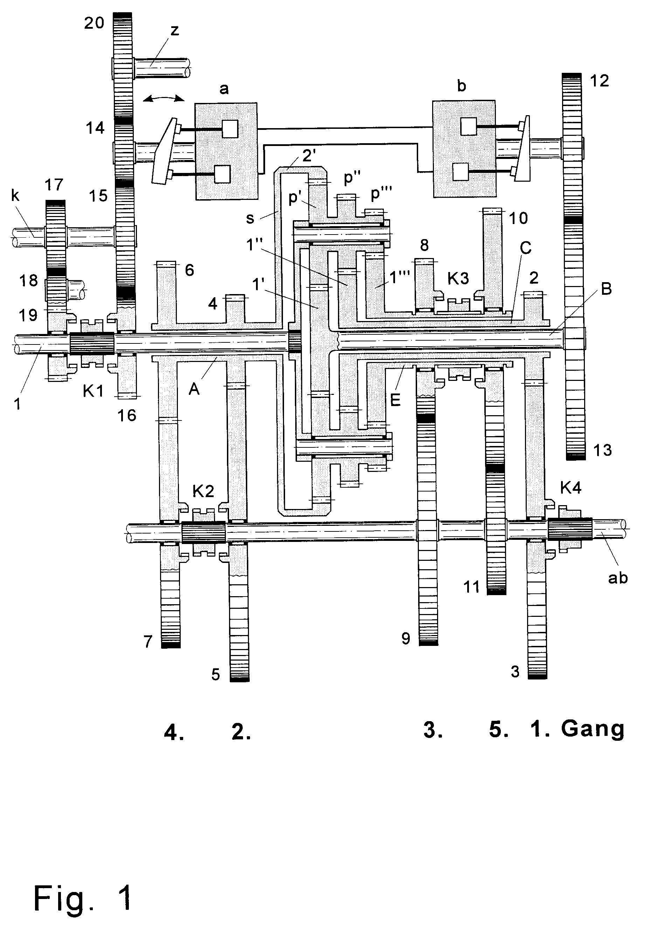

Bei dem Ausführungsbeispiel für einen vollreversierbaren Traktor nach Fig. 1 besteht das fünfwellige Umlaufgetriebe aus drei gekoppelten Planetenstufen I, II, III mit einem gemeinsamen Steg s. Es gehören zur Planetenstufe I das Sonnenrad 1'', die Teilplanetenräder p'' und das Hohlrad 2'', zur Planetenstufe II das Sonnenrad 1' die Teilplanetenräder p'; p'' und das Sonnenrad 1'' und schließlich zur Planetenstufe III das Sonnenrad 1', die Teilplanetenräder p'; p''' und das Sonnenrad 1''''.

Die Eingangswelle 1 steht mit dem Steg s in Verbindung. Das Sonnenrad 1'' fungiert als Koppelwelle C für das Anfahren mit den Rädern 2 und 3 für den 1. Gang. Das Hohlrad 2' realisiert die schnellaufende Koppelwelle A für den 2. Gang mit den Rädern 4 und 5 sowie für den 4. Gang mit den Rädern 6 und 7. Das Sonnenrad 1''' bildet die langsamlaufende Koppelwelle E für den 3. Gang mit den Rädern 8 und 9 sowie für den 5. Gang mit den Rädern 10 und 11. Die einzelnen Gänge wirken auf die Abtriebswelle "ab". Die volumenkonstante Verdrängermaschine b steht über die Räder 12 und 13 mit dem Sonnenrad 1' in Verbindung. Die Räder 14 und 15 schließen die volumenverstellbare Verdrängermaschine a des hydrostatischen Getriebes an die Kurbelwelle k der Brennkraftmaschine an. Die Räder 15 und 16 sowie 17, 18 und 19 bilden das antriebsseitige Wendegetriebe. Die Schaltungen besorgen die Doppelkupplungen K1 für das Wendegetriebe, K2 für den 2. und 4. Gang, K3 für den 3. und 5. Gang sowie die Kupplung K4 für den 1. Gang. Die Zapfwelle z steht über die Räder 20; 14 und 15 mit der Kurbelwelle k in Verbindung.

Bei der Anordnung von drei gleichmäßig am Stegumfang verteilten Stufenplaneten erfüllen zum Beispiel die Zähnezahlen $z_{1'} = 45$, $z_{1''} = 60$, $z_{1'''} = 75$, $z_{p'} = 45$, $z_{p''} = 30$, $z_{p'''} = 15$ und $z_{2'} = -135$ die Einbaubedingungen. Diese Zähnezahlen ermöglichen auch den notwendigen konstanten Achsabstand.

Die gewählten Zähnezahlen bestimmen die Standübersetzungen $i_o$, d. h. die Übersetzungen bei stehendem Planetenradträger, d.h. Steg der einzelnen Planetenstufen. So betragen für die Stufe I $i_{oI} = z_{2'}/z_{1'} = -3$, für die Stufe II $i_{oII} = z_{p'}z_{1''}/z_{1'}z_{p''} = 2$ und für die Stufe III $i_{oIII} = z_{p'}z_{1'''}/z_{1'}z_{p'''} = 5$.

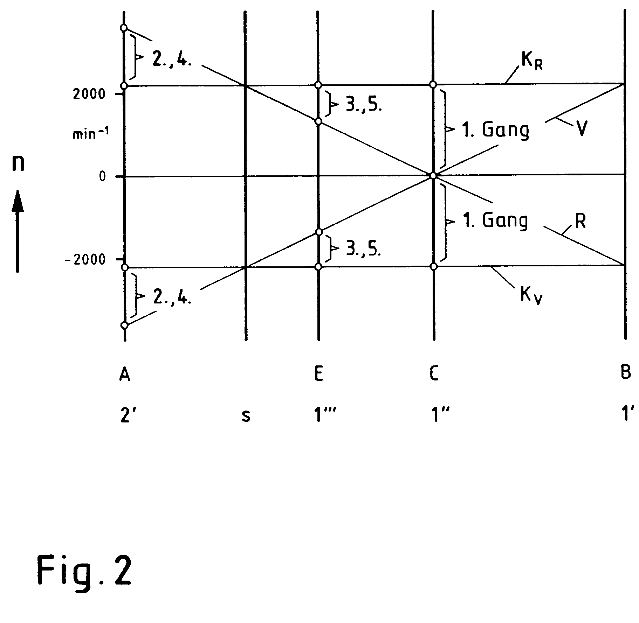

Fig. 2 zeigt für das gewählte Beispiel das Drehzahlleiterdiagramm des fünfwelligen Umlaufgetriebes. Die Standübersetzungen bestimmen Lage und Abstand der Drehzahlleitern für die Glieder 2'; s; 1'''; 1''; 1' bzw. für die Wellen A; s; E; C und B. Da sich die Drehzahlen n der einzelnen Wellen linear verhalten, gibt eine beliebige Gerade im Drehzahlleiterdiagramm den zugehörigen Drehzahlzustand an. In Fig. 2 kennzeichnen die Gerade V den Anfahrzustand bei Vorwärtsfahrt und die Gerade R den Anfahrzustand bei Rückwärtsfahrt. Die waagerechten Geraden KV den Kupplungszustand der Planetenstufen I, II und III. Fig. 2 markiert die Drehzahlbereiche der jeweils leistungsführenden Gänge.

Nähere Erläuterungen zum Drehzahlleiterdiagramm lassen sich aus Müller, Herbert W. "Die Umlaufgetriebe" Springer Verlag, 1971 entnehmen.

Für das Stellverhältnis der Koppelwelle A gilt die Beziehung $\phi_A = (i_{oI} - 2)/i_{oI}$ und für das der Koppelwelle E die Gleichung $\phi_E = i_{oIII}/(i_{oIII} - 2)$. Für gleiche Stellverhältnisse, also $\phi_A = \phi_E$, muß die Bedingung $i_{oI} + i_{oIII} = 2$ erfüllt sein.

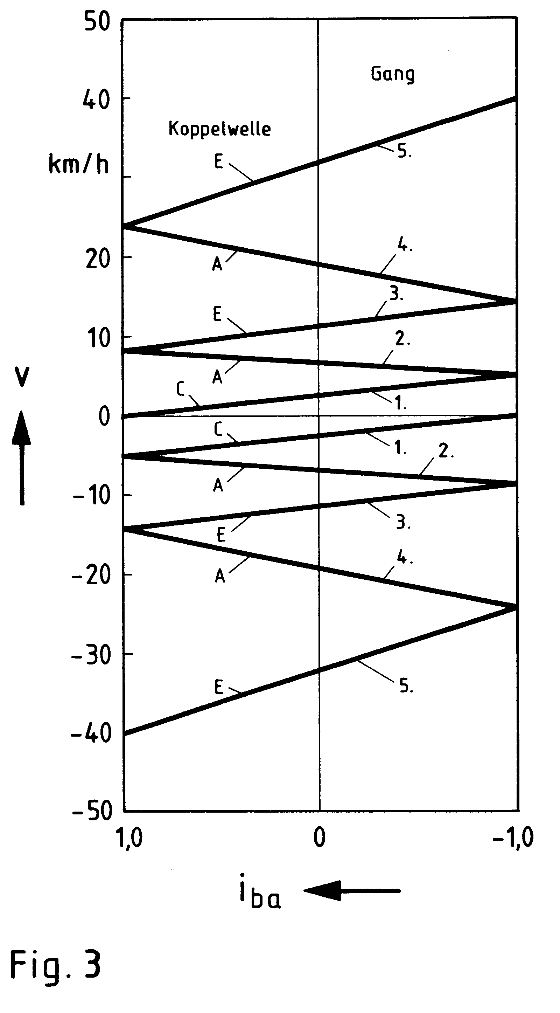

Fig. 3 stellt die Fahrgeschwindigkeiten v des Traktors abhängig von der Übersetzung des hydrostatischen Getriebes $i_{ba} = n_b/n_a$ dar. Das Diagramm gibt die leistungsführenden Koppelwellen sowie die jeweils zugehörigen Gänge an.

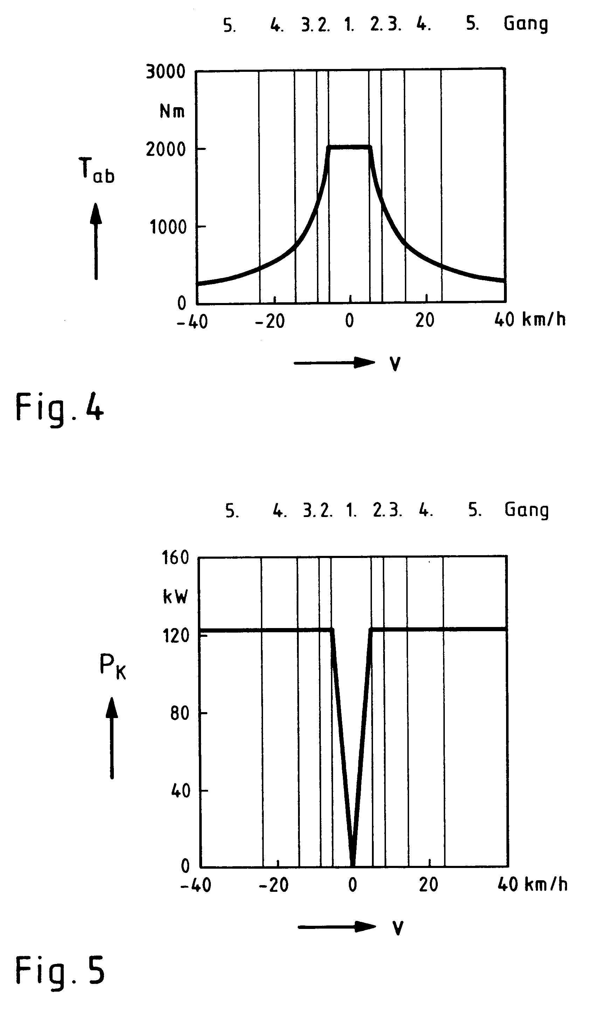

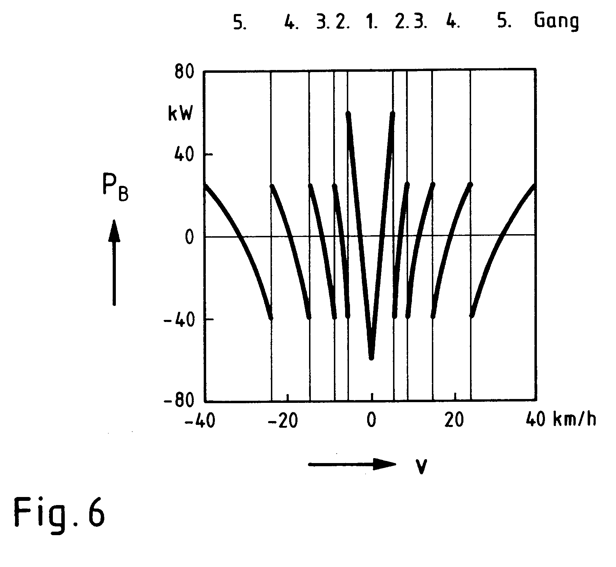

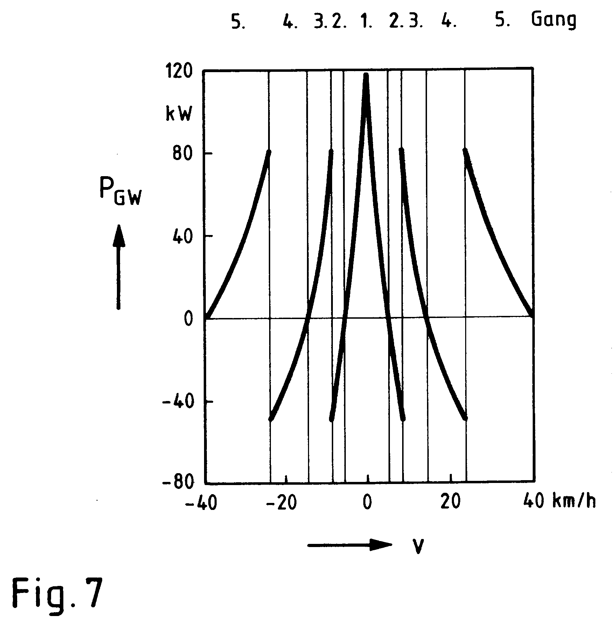

Zur weiteren Erläuterung bringen jeweils abhängig von der Fahrgeschwindigkeit v Fig. 4 das Abtriebsdrehmoment $T_{ab}$, Fig. 5 die zugehörige Leistung an der Kurbelwelle $P_k$, Fig. 6 die zugehörige hydrostatische Leistung $P_B$ und Fig. 7 die zugehörige Gleitwälzleistung $P_{GW}$ des fünfwelligen Umlaufgetriebes. Diese Darstellungen vernachlässigen die Verlustleistungen. Der Traktor erreicht bei einem Abtriebsdrehmoment $T_{ab}$ = 2000 Nm die Rutschgrenze. Die Figuren 4 bis 7 geben die jeweils leistungsführenden Gänge an.

Konstruktive Untersuchungen haben ergeben, daß der Herstellungsaufwand für das erfindungsgemäße Getriebe im Vergleich zu den Getrieben nach den eingangs erwähnten Patentschriften geringer ist. Darüber hinaus verkürzen sich die Baulängen. Setzt man für den als Beispiel gewählten 122,5 kW Traktor nach der erfindungsgemäßen Lösung die Baulänge für das fünfwellige Umlaufgetriebe mit 100 % an, so beläuft sich diese bei etwa gleichem Bauquerschnitt bei den Vorschlägen nach Fig. 8 der EP 0 302 188 A1 auf 180 % und nach der Schrift WO 89109899 auf 240 %.

## Patentansprüche

1. Lastschaltgetriebe mit stufenlosen hydrostatischen Gangübersetzungen bestehend aus einem fünfwelligen Zahnräder-Umlaufgetriebe, von dem eine Welle die Antriebswelle bildet, eine zweite Welle für den Anschluß einer hydrostatischen Verdrängermaschine dient, die mit einer an die Antriebswelle angeschlossenen Verdrängermaschine ein stufenlos einstellbares hydrostatisches Getriebe darstellt, und wobei ferner von dem genannten Umlaufgetriebe eine Welle als langsamlaufende, eine Welle als schnelllaufende Koppelwelle und die noch verbleibende fünfte Welle als Anfahrkoppelwelle fungieren, wobei die Koppelwellen abwechselnd über Zahnrad-Nachschaltstufen die durchzusetzende Leistung zur Abtriebswelle des Lastschaltgetriebes führen, wobei der Wechsel der einzelnen Gänge ohne Zugkraftunterbrechung und bei synchronen Drehzahlen erfolgt,
dadurch gekennzeichnet, daß die in einem Planetenradträger, d.h. Steg (s) gelagerten Stufenplanetenräder aus drei Teilplanetenrädern (p'; p''; p''') bestehen, von denen p' mit einem Sonnenrad 1'und einem Hohlrad 2', p'' mit einem Sonnenrad 1'' und p''' mit einem Sonnenrad 1''' kämmen, wobei die Glieder s die Antriebswelle, 1' die Anschlußwelle (B) für die volumenkonstante Verdrängermaschine (b), 1'' die Anfahrkoppelwelle (C), 2' die schnelllaufende Koppelwelle (A) und 1''' die langsamlaufende Koppelwelle (E) bilden.

**4.   2.              3.   5.   1. Gang**

# Fig. 1

Fig.2

Fig. 3

5.    4. 3.2. 1. 2.3. 4.    5. Gang

Fig. 4

5.    4. 3.2. 1. 2.3. 4.    5. Gang

Fig. 5

7

Fig. 6

EP 0 628 751 A1

5.　　4.　3.2.　1.　2.3.　4.　　5.　Gang

$P_{GW}$

Fig. 7

9

**Europäisches Patentamt**

**EUROPÄISCHER RECHERCHENBERICHT**

Nummer der Anmeldung

EP 94 10 7737

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.5) |
|---|---|---|---|
| A | DE-A-19 52 966 (URS SYSTEMS) * Seite 14, Absatz 2 - Seite 16, Absatz 1; Abbildungen 1,16 * --- | 1 | F16H47/04 F16H37/08 |
| P,A | EP-A-0 557 700 (JARCHOW) * Zusammenfassung; Abbildung 1 * --- | 1 | |
| P,A | WO-A-94 10483 (BAMFORD) * Abbildungen 15,16 * --- | 1 | |
| A | DE-A-39 24 548 (INGELHEIM) * Zusammenfassung; Abbildungen 2,3 * --- | 1 | |
| A | DE-B-15 00 322 (BATTELLE) * das ganze Dokument * ----- | 1 | |

RECHERCHIERTE SACHGEBIETE (Int.Cl.5)

F16H

Der vorliegende Recherchenbericht wurde für alle Patentansprüche erstellt

| Recherchenort | Abschlußdatum der Recherche | Prüfer |
|---|---|---|
| BERLIN | 2. September 1994 | Gertig, I |